# EUROPEAN PATENT SPECIFICATION

(11) **EP 1 393 635 B1**
(45) Date of publication and mention of the grant of the patent: **28.07.2010**
(21) Application number: 02769598.0
(22) Date of filing: 14.05.2002
(51) Int. Cl.: A23L 1/226, A23L 2/00, A23L 1/39, A23L 1/221

(54) **SEASONING**
GEWÜRZ
ASSAISONNEMENT

(30) Priority: 14.05.2001 JP 2001143278
(43) Date of publication of application: 03.03.2004
(73) Proprietor: Kyowa Hakko Food Specialties Co., Ltd., Tokyo 100-8185 (JP)
(72) Inventor: OGASAWARA, M., c/o Kirin Kyowa Foods Company Ltd., Tokyo 140-0002 (JP); KATO, Tomoe, c/o Kirin Kyowa Foods Company Limited, Tokyo 140-0002 (JP); HIGUCHI, Akira, c/o Kirin Kyowa Freeze Drying Company Ltd., Yamaguchi 747- 0825 (JP)
(74) Representative: Tanner, James Percival
(86) International application number: PCT/JP2002/004662
(87) International publication number: WO 2002/091855

(56) References cited:
- WO-A-93/12670
- JP-A- 3 155 759
- JP-A- 10 276 709
- JP-A- 10 276 710
- JP-A- 11 146 768
- JP-A- 11 313 635
- JP-A- 52 012 937
- JP-A- 52 110 874
- JP-A- 55 104 858
- JP-A- 56 029 957
- JP-A- 59 006 867
- JP-A- 61 181 357
- JP-A- 2002 101 842
- JP-B1- 43 020 160
- JP-B1- 48 024 753
- US-A- 4 732 773
- US-A- 5 292 538
- US-B1- 6 313 273
- TOSHINOBU SUZUKI: 'Denshi range chori shokuhin no flavor' FOOD PROCESSING vol. 33, no. 12, 1998, pages 5 - 8, XP002957321
- KATSUE ISHII ET AL.: 'Kanetsu gyuniku no teimi keisei ni okeru peptide no yakuwari' JOURNAL OF HOME ECONOMICS OF JAPAN vol. 46, no. 4, 1995, pages 307 - 312, XP002957322
- TAKEHIKO WATANABE: 'Peptide no teimiryoku ni yoru koku no zokyo' FOOD CHEMICALS vol. 15, no. 4, 1999, pages 41 - 46, XP002957323
- YUKO IWAMASA: 'Gyosho chomiryo no tokucho to shokuhin he no riyo' NEW FOOD INDUSTRY vol. 40, no. 12, pages 18 - 24, XP002957324

## Description

### Technical Field

The present invention relates to a flavor improving agent for a food or drink.

### Background Art

Basic tastes are the most basic elements that represent the quality of taste and, at present, physiologically mean five tastes, that is, sweetness, saltiness, sourness, bitterness and *umami* (Maruzen Shokuhin Sogo Jiten, Maruzen).

In addition to basic tastes, there is body taste(in Japanese, "*kokumi*"). Body taste means *umami* with continuity, preferably having thickness and mouthfullness imparted thereto.

Although *umami* seasonings and natural seasonings such as yeast extract, protein hydrolyzate, fish and shell extract and meat extract can impart *umami* and other basic tastes, they can hardly impart sufficient body taste.

For imparting "*body*" to a food or drink, the known methods include those comprising addition of pyrazine compounds (Japanese Published Unexamined Patent Application No. 313635/99), glutathione [Biosci. Biotech. Biochem, 61, 1977-1980 (1997)], sulfone group-containing compounds, phosphates and betaine (Japanese Published Unexamined Patent Application No. 289761/96), an enzymatic hydrolysate of gelatin and tropomyosin (Japanese Published Unexamined Patent Application No. 228715/96) and an O/W emulsified composition (Japanese Published Unexamined Patent Application No. 179026/98), respectively.

Thus, development of a method for imparting body taste to a food or drink is desired.

Salt is a flavoring substance having saltiness which is one of the basic tastes. In addition to having an action to improve the quality of taste, salt has an effect on improving storage stability and processability of foods, such as improvement of storage stability due to osmotic pressure and improvement of binding ability of fish and meat paste products and flour products, and is used in many foods. In salt-containing foods, processes have conventionally been carried out to reduce saltiness and provide milder taste, that is, to milden a salty taste.

The known methods for mildening a salty taste include those comprising addition of an amino acid or lactic acid [Chomiryo and Koshinryo-no-Jiten (Dictionary of Seasonings and Spices), pp. 234, Asakura Shoten], glycyrrhizin [Chomiryo and Koshinryo-no-Jiten) (Dictionary of Seasonings and Spiaces), pp. 137, Asakura Shoten] and sucralose (Japanese Published Unexamined Patent Application No. 205814/96), respectively.

Thus, development of a method for mildening a salty taste is desired.

On the other hand, it has been known that emulsifiability, foamability, resistance to protease digestion and divalent metal ion-binding ability are improved by subjecting egg yolk protein to amino-carbonyl reaction with enzymatic decomposate of galactomannan (Japanese Published Unexamined Patent Application No. 277056/94).

Japanese Published Unexamined Patent Application No. 276709/98 and Japanese Published Unexamined Patent Application No. 276710/98 disclose a method and substance that functions to add "rich flavor" to food, which is produced by heating a solution containing acid-treated or base-treated gelatin and sugar.

Japanese Published Unexamined Patent Application No. 110874/77 discloses a flavor improving agent for foods, which is produced by heating a solution containing hydrolysate of collagen and sugar.

Japanese Published Unexamined Patent Application No. 146768/99 discloses a seasoning that is produced by heating sugars and peptides in an alcohol, thereafter adding the resulting substance to extracts and heating.

Japanese Published Unexamined Patent Application No. 181357/86 discloses a beef flavouring that is produced by heating an aqueous solution of dipeptides and reduced sugars.

Japanese Published Unexamined Patent Application No. 104858/80, Japanese Published Unexamined Patent Application No. 29957/81, and Japanese Published Unexamined Patent Application No. 155759/91 disclose gum, candy, tea or flavour improving agents containing products of amino-carbonyl reactions or melanoidin.

Food processing, 33, 5-8 (1998) presents a feature wherein pyrazine compounds are produced by Maillard reactions and the aromas thereof are important components in food prepared by heating."

Japanese Published Unexamined Patent Application No. 006867/84 discloses barley blended with melanoidin prepared from a saccharide and an amino acid.

Japanese Published Unexamined Patent Application No. 2002-101842 discloses a seasoning material prepared by heating water, saccharide and a peptide at 95-100°C for 60-120 minutes.

### Disclosure of the Invention

An object of the present invention is to provide a method for improving flavor of a food or drink, a flavor improving agent for a food or drink, and a food or drink having improved flavor.

The present invention relates to the following (1)-(11).
(1) A method for improving flavor of a food or drink, which comprises adding an amino-carbonyl reacted peptide obtained by reacting a peptide having a molecular weight of 1000-5000 with a carbonyl compound.
(2) The method according to (1), wherein improving flavor is enhancing body taste.
(3) The method according to (2), which comprises further addition of a pyrazine compound.
(4) The method according to (1), wherein improving flavor is mildening a salty taste.
(5) A flavor improving agent comprising, as an active ingredient, an amino-carbonyl reacted peptide obtained by reacting a peptide having a molecular weight of 1000-5000 with a carbonyl compound.
(6) The flavor improving agent according to (5) containing an *umami* substance.
(7) The flavor improving agent according to (5) or (6) containing a pyrazine compound.
(8) A food or drink comprising the flavor improving agent according to any one of (5) to (7) added thereto.
(9) Use of an amino-carbonyl reacted peptide obtained by reacting a peptide having a molecular weight of 1000-5000 with a carbonyl compound for producing a flavor improving agent.
(10) Use of (i) an amino-carbonyl reacted peptide obtained by reacting a peptide having a molecular weight of 1000-5000 with a carbony 3a compound and (ii) an *umami* substance for producing a flavor improving agent.
(11) Use of (i) an amino-carbonyl reacted peptide obtained by reacting a peptide having a molecular weight of 1000-5000 with a carbonyl compound, (ii) *umami* substance, and (iii) a pyrazine compound for producing a flavor improving agent.

Although peptides having a molecular weight of 1000-5000 can be obtained by peptide synthesis, they are usually obtained by hydrolyzing a protein with an acid or protein hydrolase and preferably treating the resulting hydrolyzate with an ultra-filtration membrane or by gel filtration to collect a fraction having a molecular weight of 1000-5000.

As proteins, any proteins such as plant proteins, animal proteins and proteins derived from yeast cells may be used.

Examples of plant proteins are seed-proteins such as soybean protein, wheat protein and maize protein.

Examples of animal proteins are lactoproteins such as whey protein and casein, egg proteins such as egg white protein and egg yolk protein, blood proteins such as plasma protein and blood cell protein, and muscle proteins such as meat protein and fish protein.

As yeast cell-derived proteins, yeasts such as brewing yeast and baker's yeast may be used as they are, or after isolation and purification of the protein contained in the cell.

Proteins obtained by applying a chemical treatment, an enzymatic treatment or a physical treatment to the above-described proteins, for example, gelatin, plakalbumin, metaprotein, proteose and peptone may also be used.

Gelatin has two types, one is obtained by acid treatment (type A) and the other by alkali treatment (type B), and both types may be used.

In the present invention, suitable proteins are soybean protein, wheat protein, whey protein, casein, plasma protein, egg white protein, gelatin and yeast cell-derived proteins.

The protein hydrolase includes endopeptidase (also called proteinase) and exopeptidase, and endopeptidase is preferably used.

Examples of endopeptidase are serine protease such as trypsin, chymotrypsin and subtilisin, thiol protease such as papain, bromelain and ficin, carboxyprotease such as pepsin and chymosin, and metal protease such as thermolysin.

Examples of commercially available endopeptidase are trypsin, chymotrypsin, pepsin, Sumizyme LP (Shin Nippon Kagaku), Bioprase (Nagase & Co., Ltd.) and Alkalase (Novo).

As acid, inorganic acids such as hydrochloric acid, sulfuric acid and nitric acid, and organic acids such as citric acid are used.

As protein hydrolase, endopeptidase having exopeptidase activity is preferably used because, sometimes, *umami* derived from free amino acid and low molecular weight peptides is produced and bitter taste also caused by them is reduced by the action of exopeptidase.

Examples of endopeptidase having exopeptidase activity are Umamizyme (Amano Enzyme) and Actinase (Kaken Pharmaceutical). In using endopeptidase having a low exopeptidase activity, exopeptidase may be separately added.

The amount of protein hydrolase used is not limited as it depends on the kinds of the enzyme and protein to be used, but is preferably 0.05-10% (w/w), more preferably 0.1-7% (w/w) and particularly preferably 1-5% (w/w) of the protein to be hydrolyzed.

As to the pH and the reaction temperature for the hydrolysis of proteins, the optimum conditions for the enzyme used or conditions similar thereto may be properly selected.

The pH can be adjusted by adding acids that are acceptable for a food or drink, such as hydrochloric acid, acetic acid, lactic acid, citric acid and phosphoric acid, and alkalis that are acceptable for a food or drink, such as sodium hydroxide, potassium hydroxide and calcium hydroxide.

The time of protein hydrolysis varies depending upon the kinds of protein hydrolase used, its amount and temperature and pH conditions. Usually, the time of hydrolysis is preferably 1-100 hours and more preferably 6-72 hours.

After the completion of hydrolysis, the reaction mixture can be directly subjected to the subsequent treatment as it is. It is also possible to inactivate the enzyme by heating or acid treatment before subjecting the reaction mixture to the subsequent treatment.

Any organic compounds having a carbonyl group may be used as the carbonyl compound of the present invention.

Use of reducing sugars and carbonyl compounds formed by oxidation of lipids is preferred and that of reducing sugars is particularly preferred.

Examples of reducing sugars are monosaccharides and polysaccharides longer than a disaccharide having reducibility.

Examples of monosaccharides are triose, tetraose, pentose, hexose and heptose, and pentose or hexose is suitably used.

Examples of pentose are L-arabinose, D-xylose, D-ribose and D-2-deoxyribose, and D-xylose or D-ribose is suitably used.

Examples of hexose are D-glucose, D-fructose, D-galactose and D-mannose, and D-glucose or D-fructose is suitably used.

The polysaccharides longer than a disaccharide having reducibility are polysaccharides having a carbonyl group formed by bonding of two or more monosaccharides, which reduce Fehling's solution in alkaline condition and include, for example, maltose, lactose, isomaltose, maltotriose and maltotetraose.

The carbonyl compounds formed by oxidation of lipids include 2-dienals formed by decomposition of hydroperoxide produced by oxidation of lipids.

The carbonyl compounds formed by oxidation of lipids include aldehyde compounds formed by decomposition of hydroperoxide produced by oxidation of lipids.

The aldehyde compounds include saturated aldehyde and unsaturated aldehyde.

Examples of saturated aldehyde are propanal, hexanal, octanal and nonanal, and hexanal or nonanal is suitably used.

Examples of unsaturated aldehyde are 2-butenal (crotonaldehyde), 2-hexenal, 2-decenal, 2-undecenal, 2,4-heptadienal and 2,4-decadienal, and 2-butenal or 2-hexenal is suitably used.

The steps of amino-carbonyl reaction are illustrated below.

In an aqueous medium, a peptide having a molecular weight of 1000-5000 is dissolved at a concentration of 1-60% (w/v), preferably 20-40% (w/v), and a carbonyl compound is dissolved at a concentration of 0.05-30% (w/v), preferably 0.1-10% (w/v) to prepare an aqueous mixed solution.

An aqueous medium means water, or a medium comprising water as a major component and containing other components, for example, alcohols, amino acids, metal ions, organic acids and salt.

The aqueous mixed solution is adjusted to pH 3-9, preferably pH 5-7 and allowed to react at 30-180°C, preferably 60-120°C for one hour to several months, preferably 1-6 hours to prepare an amino-carbonyl reactant of a peptide having a molecular weight of 1000-5000 with a carbonyl compound (hereinafter also referred to as an amino-carbonyl reacted peptide).

The solution prepared according to the above method may be added to a food or drink, or used as a flavor improving agent as it is. The solution may also be subjected to treatments such as decolorization with, for example, active carbon and ultrafiltration membrane, separation and purification treatment, for example, by chromatography and membrane separation, and concentration treatment, for example, by concentration under reduced pressure to prepare a liquid such as decolorized liquid, purified liquid and concentrated liquid, and the liquid thus prepared may be added to a food or drink, or used as a flavor improving agent. Furthermore, the liquid may be subjected to a treatment, for example, a drying treatment such as drying under reduced pressure and spray drying to prepare a solid such as a solid matter and a powder, and such solid may be added to a food or drink, or may be used as a flavor improving agent.

The steps of amino-carbonyl reaction can also be carried out in the following manner.

In an aqueous medium, a peptide having a molecular weight of 1000-5000 is dissolved at a concentration of 1-60% (w/v), preferably 20-40% (w/v), and a carbonyl compound is dissolved at a concentration of 0.05-30% (w/v), preferably 0.1-10% (w/v) to prepare an aqueous mixed solution.

The aqueous mixed solution is adjusted to pH 3-9, preferably pH 5-7 and then subjected to a drying treatment such as freeze-drying and spray drying to obtain a dry powder. The dry powder thus obtained is adjusted to have a relative humidity of 50-90%, preferably 60-80% and allowed to react at 30-180°C, preferably 60-120°C for several hours to several months, preferably 3-10 days to prepare the amino-carbonyl reacted peptide of the present invention.

The amino-carbonyl reacted peptide prepared according to the above method may be added to a food or drink as it is or may be used as a flavor improving agent after being processed.

Methods for improving flavor by adding the amino-carbonyl reacted peptide of the present invention to a food or drink include those for enhancing body taste, enhancing *umami* and mildening a salty taste, and a method for enhancing body taste or mildening a salty taste is suitably used.

The action of improving flavor, particularly that of enhancing body taste, according to the present invention can be intensified by pyrazine compounds.

In the present invention, pyrazine compounds mean pyrazine or pyrazine derivatives having one or more substituents on the pyrazine skeleton.

The pyrazine derivatives include monosubstituted compounds in which one of the four carbon atoms of pyrazine has a substituent, disubstituted pyrazine in which two of them have a substituent, trisubstituted pyrazine in which three of them have a substituent and tetrasubstituted pyrazine in which all the four carbon atoms are substituted.

Examples of substituents are saturated or unsaturated hydrocarbon groups having 1-6, preferably 1-3 carbon numbers, alkoxy groups, alkanoyl groups, alkylthio groups and aroyl groups such as benzoyl group. These substituents may be of condensed hetero-polycyclic type in which adjacent two substituents are mutually linked to form a further ring. Preferred substituents are methyl and ethyl groups.

Any pyrazine compounds that are edible may be used. Examples thereof are 2-methylpyrazine, 2,5-dimethylpyrazine, 2,6-dimethylpyrazine, 2,3,5-trimethylpyrazine, tetramethylpyrazine, 2,5-diethylpyrazine, 2,6-diethylpyrazine, 2,3-diethyl-5-methylpyrazine and 2-ethyl-3,5-dimethylpyrazine.

In the present invention, pyrazine compounds synthesized according to conventional methods and commercially available compounds may both be used. Furthermore, pyrazine compounds crudely or fully purified from a natural or a synthesized solution highly containing pyrazine compounds may also be used. The solution highly containing pyrazine compounds can be prepared, for example, by mixing 110 mmol/l amino acid such as glycin and lysine with 70 mmol/l ribose, and adjusting the mixture to pH 6.5, followed by heating at 140°C for one hour [Food Chemistry, 52, 361-366 (1995), Zeitschrift fuer Lebensmittel Untersuchung und Forschung, 198, 210-214 (1994)]. The solution highly containing pyrazine compounds can also be prepared by a procedure similar to that described above except for using a protein hydrolyzate solution obtained by hydrolyzing an animal or plant protein with acid or enzyme, or yeast extract in place of amino acid.

The amino-carbonyl reacted peptide of the present invention is suitably used for imparting continuity to *umami* and enhancing body taste.

*Umami* includes tastes imparted by *umami* substances either singly or plurally. Examples of *umami* substances are sodium glutamate, aspartic acid, oxyglutamic acid, ibotenic acid, tricholomic acid, sodium inosinate, sodium guanylate and sodium succinate, and particularly *umami* imparted by sodium glutamate is preferred.

Except for using the amino-carbonyl reacted peptide and, if necessary, pyrazine compounds, there is no limitation as to the method for improving flavor of a food or drink of the present invention, and methods for seasoning a food or drink usually used is preferred.

The methods for improving flavor of a food or drink according to the present invention include, for example, a method which comprises addition of the amino-carbonyl reacted peptide as it is or as the flavor improving agent of the present invention as a part of the raw materials for a food or drink when the food or drink is produced, and a method which comprises addition of the amino-carbonyl reacted peptide as it is or as the flavor improving agent of the present invention when a food or drink in the form of a manufactured product is cooked by heating, microwave cooking or vacuum cooking, or taken.

Examples of a food or drink to which the methods for improving flavor of the present invention are applicable are seasonings such as *miso* or soybean paste, soy sauce, dips, stocks, dressings, mayonnaise and tomato ketchup, soups such as Japanese clear soup, consommé soup, egg soup, *wakame* seaweed soup, shark's fin soup, pottage and miso soup, soups and sauces for noodles (buckwheat noodle, Japanese wheat noodle, Chinese noodle, pasta, etc.), cooked rice products such as rice gruel, porridge of rice and vegetables and rice with hot tea or hot water poured on it, processed livestock products such as ham, sausages and cheese, processed marine products such as steamed fish paste, dried marine products, salted and fermented fish products and food delicacies, processed vegetable products such as pickles, snacks such as potato chips, rice crackers and cookies, and cooked foods such as boiled, fried and baked foods and curry.

The flavor improving agent of the present invention comprises the amino-carbonyl reacted peptide, and may contain, if necessary, pyrazine compounds and, if further necessary, additives usable for a food or drink, such as inorganic salts, acids, amino acids, nucleic acids, sugars, natural seasonings, spices and excipients.

An example of inorganic salts is common salt.

Examples of acids are ascorbic acid, and carboxylic acids such as fumaric acid, malic acid, tartaric acid, citric acid and fatty acid

Examples of amino acids are sodium glutamate, glycine and alanine.

Examples of nucleic acids are sodium inosinate and sodium guanylate.

Examples of sugars are sucrose, glucose and lactose.

Examples of natural seasonings are soy sauce, miso or soybean paste, meat extract, poultry extract, fish and shell extract, yeast extract and protein hydrolyzate.

Examples of spices are spices and herbs.

Examples of excipients are dextrin, i.e. a starch hydrolyzate and various starches.

The flavor improving agent of the present invention may be used as a flavor improving agent of any of the types such as body taste enhancer, *umami* enhancer and agent for mildening a salty taste, and is suitably used as a seasoning for enhancing body taste or an agent for mildening a salty taste.

Except for being comprised of an amino-carbonyl reacted peptide and, if necessary, pyrazine compounds, and, if further necessary, a *umami* substance, the flavor improving agent of the present invention can also be prepared using ordinary processes for producing seasonings.

For the flavor improving agent of the present invention, to enhance *umami* or body taste of an *umami* substance, for example, sodium glutamate, it is preferred to blend 0.01-50 parts by weight of the amino-carbonyl reacted peptide per 100 parts by weight of sodium glutamate.

The flavor improving agent of the present invention may take any forms such as liquid, powder and granule.

The flavor improving agent of the present invention may be added when a food or drink is produced or cooked, or otherwise added to a produced or cooked food or drink.

The amount of the flavor improving agent of the present invention to be added may be determined according to a food or drink that is the subject of addition.

When used as a body taste enhancer , the flavor improving agent may be added so that the concentration of the amino-carbonyl reacted peptide in a food or drink is preferably 0.001-20% (w/w), more preferably 0.2-10% (w/w). Also, if necessary, the flavor improving agent or the seasoning is added so that the concentration of the pyrazine compounds in a food or a drink is preferably 0.001-1 ppm, more preferably 0.01-0.1 ppm.

When used as an agent for mildening a salty taste, the flavor improving agent may be added so that the concentration of the amino-carbonyl reacted peptide in a food or drink is preferably 0.001-30% (w/w), particularly 0.2-20% (w/w).

Examples of the present invention are shown below.

### Best Modes for Carrying Out the Invention

### Example 1

Isolated soy protein (Fuji Oil) (50 g) was dispersed in 450 ml of water, to which 1 ml of Alkalase 2.4L (Novozymes, 2.4 AU/g, the same applies hereinafter) was added, and the mixture was allowed to react at 50°C for 30 minutes without adjusting the pH. After the completion of reaction, the reaction mixture was adjusted to pH 8 with 6 mol/l sodium hydroxide and allowed to react at 50°C for 20 hours while maintaining the mixture at pH 8. After the completion of reaction, the reaction mixture was adjusted to pH 6.0 with 6 mol/l hydrochloric acid and heated at 85-90°C for 20 minutes to inactivate the enzyme, followed by centrifugation. The resulting supernatant was filtered to obtain a transparent soy protein decomposition solution. The decomposition solution was subjected to separation using an ultrafiltration membrane with a molecular-weight cutoff of 1000-5000 to obtain a fraction containing substance having a molecular weight of 1000-5000. The fraction was freeze-dried to obtain a powder.

The powder (2 g) thus obtained was dissolved in 50 ml of an aqueous solution containing 0.04 g of xylose (Wako Pure Chemical), and reaction was carried out at 90°C for 4 hours. After the completion of reaction, the reaction mixture was dialyzed using a dialysis membrane with a fractional molecular-weight cutoff of 1000 to obtain about 2 g of a fraction containing substance having a molecular weight of 1000 or more. By repeating this operation for 6 times, about 10 g of a fraction containing substance having a molecular weight of 1000 or more was obtained.

### Comparative Example 1

About 10 g of a fraction containing substance having a molecular weight of 1000 or more was obtained by a method similar to that of Example 1 except that xylose (0.04 g) was not used.

### Example 2

Gelatin (Type B)(Sigma-Aldrich, the same applies hereinafter) (50 g) was dispersed in 450 ml of water, to which 1 ml of Alkalase (Novozymes) was added, and the mixture was allowed to react at 50°C for 30 minutes without adjusting the pH. After the completion of reaction, the reaction mixture was adjusted to pH 8 with 6 mol/l sodium hydroxide and allowed to react at 50°C for 20 hours while maintaining the mixture at pH 8. After the completion of reaction, the reaction mixture was adjusted to pH 6.0 with 6 mol/l hydrochloric acid and heated at 85-90°C for 20 minutes to inactivate the enzyme, followed by centrifugation. The resulting supernatant was filtered to obtain a transparent gelatin (type B) decomposition solution. The decomposition solution was subjected to separation using an ultrafiltration membrane with a molecular-weight cutoff of 1000-5000 to obtain a fraction containing substance having a molecular weight of 1000-5000. The fraction was freeze-dried to obtain a powder.

The powder (2 g) thus obtained was dissolved in 50 ml of an aqueous solution containing 0.04 g of ribose (Wako Pure Chemical), and reaction was carried out at 90°C for 4 hours. After the completion of reaction, the reaction mixture was dialyzed using a dialysis membrane with a fractional molecular-weight cutoff of 1000 to obtain about 2 g of a fraction containing substance having a molecular weight of 1000 or more. By repeating this operation for 6 times, about 10 g of a fraction containing substance having a molecular weight of 1000 or more was obtained.

### Comparative Example 2

About 10 g of a fraction containing substance having a molecular weight of 1000 or more was obtained according to a method similar to that of Example 2 except that ribose (0.04 g) was not used.

### Example 3

A mix type consommé soup containing 1.5% (w/v) consommé soup was prepared by adding hot water to 15 g of a consommé soup premix comprising 50% (w/w) salt, 7%(w/w) white superior soft sugar, 3% (w/w) onion extract powder (Kyowa Hakko Kogyo, the same applies hereinafter), 1.5% (w/w) sodium glutamate (Kyowa Hakko Kogyo, the same applies hereinafter) and 38.5% (w/w) lactose to bring the total volume to 1 liter. To the consommé soup thus prepared, the fraction containing substance having a molecular weight of 1000 or more obtained in Example 1 or the fraction containing substance having a molecular weight of 1000 or more obtained in Comparative Example 1 was added at a concentration of 0.2% (w/v) to prepare a consommé soup. A sensory test with respect to flavor was conducted for each soup at a tasting temperature of 50-60°C using a method of rating on five levels. The test was conducted by a panel consisting of well-trained 15 members.

The results obtained by averaging the evaluations of the panel are shown in Table 1.

In the table, the results of evaluation are indicated according to the following criteria (the same applied to the following examples).

That is, that flavor was not tasted was indicated by "-", slightly tasted was indicated by "±", somewhat tasted by "+", tasted by "++" and appreciably tasted by "+++". Furthermore, as a result of averaging the evaluations of the panel, if the result was, for example, between "+" and "++", it was indicated by "+±".

**Table 1**

| | Characteristics | *Umami* | Body taste |
|---|---|---|---|
| 1.5% (w/v) consommé soup | *Umami* | + | ± |
| +0.2% (w/v) fraction of Comparative Example 1 | *Umami* Body taste | + | + |
| +0.2% (w/v) fraction of Example 1 | Taste with continuity Strong body taste Taste of roasted flavor Mouthfullness *Umami* is enhanced. | ++ | +++ |

As shown in Table 1, body taste of the consommé soup was enhanced by the addition of the fraction containing substance having a molecular weight of 1000 or more obtained in Example 1, that is, the amino-carbonyl reacted peptide.

### Example 4

A mix type consommé soup containing 1.5% (w/v) consommé soup was prepared by adding hot water to 15 g of a consommé soup premix comprising 50% (w/w) salt, 7%(w/w) white superior soft sugar, 3% (w/w) onion extract powder, 1.5% (w/w) sodium glutamate and 38.5% (w/w) lactose to bring the total volume to 1 liter. To the consommé soup thus prepared, the fraction containing substance having a molecular weight of 1000 or more obtained in Example 2 or the fraction containing substance having a molecular weight of 1000 or more obtained in Comparative Example 2 was added at a concentration of 0.2% (w/v) to prepare a consommé soup. A sensory test with respect to flavor was conducted for each soup at a tasting temperature of 50-60°C. The test was conducted by a panel consisting of well-trained 15 members.

The results obtained by averaging the evaluations of the panel are shown in Table 2.

**Table 2**

| | Characteristics | *Umami* | Body taste |
|---|---|---|---|
| 1.5% (w/v) consommé soup | *Umami* | + | ± |
| +0.2% (w/v) fraction of Comparative Example 2 | *Umami,* Body taste | + | +± |
| +0.2% (w/v) fraction of Example 2 | Taste with continuity Strong body taste Taste of roasted flavor Mouthfullness *Umami* is enhanced. | ++ | +++ |

As shown in Table 2, body taste of the consommé soup was enhanced by the addition of the fraction containing substance having a molecular weight of 1000 or more obtained in Example 2, that is, the amino-carbonyl reacted peptide.

### Example 5

A mix type consommé soup (1) containing 1.5%(w/v) consommé soup was prepared by adding hot water to 15 g of a consommé soup premix comprising 50% (w/w) salt, 7%(w/w) white superior soft sugar, 3% (w/w) onion extract powder, 1.5% (w/w) sodium glutamate and 38.5% (w/w) lactose to bring the total volume to 1 liter. Consommé soup (2) was prepared by adding the fraction containing substance having a molecular weight of 1000 or more obtained in Example 1 to the consommé soup (1) at a concentration of 0.2 (w/v). Also, consommé soup (3) was prepared by adding 2,3,5-trimethylpyrazine (Sigma-Aldrich) to the consommé soup (2) at a concentration of 0.001 ppm. Furthermore, consommé soup (4) was prepared by adding 2,5-dimethylpyradzine (Sigma-Aldrich) to the consommé soup (2) at a concentration of 0.1 ppm. A sensory test with respect to flavor was conducted for consommé soups (1)-(4) at a tasting temperature of 50-60°C, respectively. The test was conducted by a panel consisting of well-trained 15 members.

The results obtained by averaging the evaluations of the panel are shown in Table 3.

**Table 3**

| | Characteristics | *Umami* | Body taste |
|---|---|---|---|
| (1) 1.5% (w/v) consommé soup | *Umami* | + | ± |
| (2) (1)+0.1% (w/v) fraction of Example1 | Taste with continuity Strong body taste Taste of roasted flavor Mouthfullness | + | ++ |
| (3) (2)+0.001 ppm 2,3,5-trimethylpyrazine | Taste with continuity Strong body taste Taste of roasted flavor Mouthfullness *Umami* is enhanced. | ++ | +++ |
| (4) (2)+0.1 ppm 2,5-dimethylpyrazine | Taste with continuity Strong body taste Taste of roasted flavor Mouthfullness | + | +++ |

As shown in Table 3, body taste enhancing action of the amino-carbonyl reacted peptide is intensified by combination with pyrazine compounds.

### Example 6

A saline solution containing 0.6% (w/v) salt was prepared. To the saline solution, the fraction containing substance having a molecular weight of 1000 or more obtained in Example 1 was added at a concentration of 0.2% (w/v) to prepare another saline solution. A sensory test with respect to flavor was conducted for the saline solutions thus prepared at a tasting temperature of 50-60°C. The test was conducted by a panel consisting of well-trained 15 members.

The results obtained by averaging the evaluations of the panel are shown in Table 4.

**Table 4**

| | Characteristics | Saltiness |
|---|---|---|
| 0.6% (w/v) saline solution | Salty taste | ++ |
| +0.2% (w/v) fraction of Example 1 | Saltiness was weakly tasted compared with 0.6% (w/v) saline solution | + |

As shown in Table 4, taste of saltiness of the saline solution was weakened by the addition of the fraction containing substance having a molecular weight of 1000 or more obtained in Example 1, that is, the amino-carbonyl reacted peptide.

### Example 7

A mix type consommé soup containing 1.5% (w/v) consommé soup was prepared by adding hot water to 15 g of a consommé soup premix comprising 50% (w/w) salt, 7%(w/w) white superior soft sugar, 3% (w/w) onion extract powder, 1.5% (w/w) sodium glutamate and 38.5% (w/w) lactose to bring the total volume to 1 liter. To the consommé soup thus prepared, the fraction containing substance having a molecular weight of 1000 or more obtained in Example 1 was added at a concentration of 0.2 %(w/v) to prepare a consommé soup. A sensory test with respect to flavor was conducted for each consommé soup at a tasting temperature of 50-60°C. The test was conducted by a panel consisting of well-trained 15 members.

The results obtained by averaging the evaluations of the panel are shown in Table 5.

**Table 5**

| | Characteristics | Saltiness |
|---|---|---|
| 1.5% (w/v) consommé soup | Salty taste | ++ |
| +0.2% (w/v) fraction of Example 1 | Salty taste is reduced and mildened. | + |

As shown in Table 5, salty taste of the consommé soup was mildened and the soup became mild by adding the fraction containing substance having a molecular weight of 1000 or more obtained in Example 1, that is, the amino-carbonyl reacted peptide.

### Industrial Applicability

According to the present invention, a method for improving flavor of a food or drink, a flavor improving agent for a food or drink, and a food or drink having improved flavor can be provided.

## Claims

1. A method for improving flavor of a food or drink, which comprises adding an amino-carbonyl reacted peptide obtained by reacting a peptide having a molecular weight of 1000-5000 with a carbonyl compound.

2. The method according to claim 1, wherein improving flavor is enhancing body taste.

3. The method according to claim 2, which comprises further addition of a pyrazine compound.

4. The method according to claim 1, wherein improving flavor is mildening a salty taste.

5. A flavor improving agent comprising, as an active ingredient, an amino-carbonyl reacted peptide obtained by reacting a peptide having a molecular weight of 1000-5000 with a carbonyl compound.

6. The flavor improving agent according to claim 5 containing an *umami* substance.

7. The flavor improving agent according to claim 5 or claim 6 containing a pyrazine compound.

8. A food or drink comprising the flavor improving agent according to any one of claims 5 to 7 added thereto.

9. Use of an amino-carbonyl reacted peptide obtained by reacting a peptide having a molecular weight of 1000-5000 with a carbonyl compound for producing a flavor improving agent.

10. Use of (i) an amino-carbonyl reacted peptide obtained by reacting a peptide having a molecular weight of 1000-5000 with a carbonyl compound and (ii) an *umami* substance for producing a flavor improving agent.

11. Use of (i) an amino-carbonyl reacted peptide obtained by reacting a peptide having a molecular weight of 1000-5000 with a carbonyl compound, (ii) *umami* substance, and (iii) a pyrazine compound for producing a flavor improving agent.

## Patentansprüche

1. Verfahren zum Verbessern des Geschmacks eines Nahrungsmittels oder Getränks, bei dem man ein mit einem Aminocarbonyl umgesetztes Peptid, das durch das Umsetzen eines Peptids mit einem Niolekulargewicht von 1000-5000 mit einer Carbonylverbindung erhalten wird, zugibt.

2. Verfahren nach Anspruch 1, wobei das Verbessern des Geschmacks eine Verstärkung des Geschmackskörpers ist.

3. Verfahren nach Anspruch 2, welches weiterhin die Zugabe einer Pyrazinverbindung umfasst.

4. Verfahren nach Anspruch 1, wobei die Verbesserung des Geschmacks das Abmildern eines salzigen Geschmacks ist.

5. Geschmacksverbesserungsmittel, welches als einen aktiven Bestandteil ein mit einem Aminocarbonyl umgesetztes Peptid, welches durch das Umsetzen eines Peptids mit einem Molekulargewicht von 1000-5000 mit einer Carbonylverbindung erhalten wird, umfasst.

6. Geschmacksverbesserungsmittel nach Anspruch 5, enthaltend eine *Umami-*Substanz.

7. Geschmacksverbesserungsmittel nach Anspruch 5 oder Anspruch 6, enthaltend eine Pyrazinverbindung.

8. Nahrungsmittel oder Getränk, umfassend diesem zugegeben das Geschmacksverbesserungsmittel nach einem der Ansprüche 5 bis 7.

9. Verwendung eines mit einem Aminocarbonyl umgesetzten Peptids, welches durch das Umsetzen eines Peptids mit einem Molekulargewicht von 1000-5000 mit einer Carbonylverbindung erhalten wird, zur Herstellung eines Geschmacksverbesserungsmittels.

10. Verwendung von (i) einem mit einem Aminocarbonyl umgesetzten Peptid, welches durch das Umsetzen eines Peptids mit einem Molekulargewicht von 1000-5000 mit einer Carbonylverbindung erhalten wird, und (ii) einer *Umami*-Substanz zur Herstellung eines Geschmacksverbesserungsmittels.

11. Verwendung von (i) einem mit einem Aminocarbonyl umgesetzten Peptid, welches durch das Umsetzen eines Peptids mit einem Molekulargewicht von 1000-5000 mit einer Carbonylverbindung erhalten wird, (ii) Umami-Substanz und (iii) einer Pyrazinverbindung zur Herstellung eines Geschmacksverbesserungsmittels.

## Revendications

1. Procédé pour améliorer l'arôme d'un aliment ou d'une boisson, qui comprend l'addition d'un peptide amino-carbonyle réagi obtenu en faisant réagir un peptide ayant une masse moléculaire de 1000-5000 avec un composé carbonyle.

2. Procédé selon la revendication 1, dans lequel l'amélioration de l'arôme consiste à en améliorer le goût.

3. Procédé selon la revendication 2, qui comprend en outre l'addition d'un composé pyrazine.

4. Procédé selon la revendication 1, dans lequel l'amélioration de l'arôme consiste à adoucir un goût salé.

5. Agent d'amélioration de l'arôme comprenant, comme ingrédient actif, un peptide amino-carbonyle réagi obtenu en faisant réagir un peptide ayant une masse moléculaire de 1000-5000 avec un composé carbonyle.

6. Agent d'amélioration de l'arôme selon la revendication 5 contenant une substance *umami.*

7. Agent d'amélioration de l'arôme selon la revendication 5 ou 6 contenant un composé pyrazine.

8. Aliment ou boisson comprenant l'agent d'amélioration de l'arôme selon l'une quelconque des revendications 5 à 7, qui y est ajouté.

9. Utilisation d'un peptide réagi d'amino-carbonyle obtenu en faisant réagir un peptide ayant une masse moléculaire de 1000-5000 avec un composé carbonyle pour produire un agent d'amélioration de l'arôme.

10. Utilisation d'un (i) peptide réagi d'amino-carbonyle obtenu en faisant réagir un peptide ayant une masse moléculaire de 1000-5000 avec un composé carbonyle et (ii) une substance *umami* pour produire un agent d'amélioration de l'arôme.

11. Utilisation d'un (i) peptide réagi d'amino-carbonyle obtenu en faisant réagir un peptide ayant une masse moléculaire de 1000-5000 avec un composé carbonyle, (ii) une substance *umami* et (iii) un composé pyrazine pour produire un agent d'amélioration de l'arôme.
